# EUROPEAN PATENT SPECIFICATION

(11) **EP 4 667 254 B1**
(45) Date of publication and mention of the grant of the patent: **29.07.2026**
(21) Application number: 25183801.7
(22) Date of filing: 18.06.2025
(51) Int. Cl.: B60K 1/04

(54) **FUEL CELL-POWERED CRAWLER VEHICLE AND CONTROL METHOD THEREOF**
BRENNSTOFFZELLENBETRIEBENES RAUPENFAHRZEUG UND STEUERUNGSVERFAHREN DAFÜR
VÉHICULE À CHENILLES ALIMENTÉ PAR PILE À COMBUSTIBLE ET SON PROCÉDÉ DE COMMANDE

(30) Priority: 19.06.2024 IT 202400014110
(43) Date of publication of application: 24.12.2025
(60) Divisional application: 26187009.1
(73) Proprietor: PRINOTH S.p.A., 39049 Vipiteno (BZ) (IT)
(72) Inventor: THOM, Jamie, 39049 VIPITENO (BZ) (IT); KIRCHMAIR, Martin, 39049 VIPITENO (BZ) (IT)
(74) Representative: Studio Torta S.p.A.

(56) References cited:
- DE-A1- 102021 202 819
- US-A1- 2023 202 288
- US-A1- 2024 060 258

## Description

### CROSS-REFERENCE TO RELATED APPLICATIONS

This patent application claims priority from Italian patent application no. 102024000014110 filed on June 19, 2024.

### TECHNICAL FIELD

The present invention relates to a fuel cell-powered crawler vehicle.

### STATE OF THE ART

Fuel cells are used in various fields of the art as an energy source. In the field of locomotion, fuel cell applications are known for powering several types of vehicles such as cars, motorcycles, buses, trains, boats, etc.

The growing need to reduce the environmental impact and, consequently, the consumption of fossil fuels is driving researchers to apply environmentally-friendly solutions in fields that have not yet been fully explored, such as the field of crawler vehicles.

Some types of crawler vehicles such as snow groomer vehicles are designed to adequately groom ski runs, and for this reason for a considerable amount of the time in use, they are found on slopes that are sometimes also particularly steep, with gradients even greater than 70%.

Similarly, crawler vehicles for managing vegetation may be used along extremely steep slopes.

The operating conditions of the crawler vehicles do not favor the use of fuel cells as an energy source because fuel cell operation is optimal in terms of efficiency when the fuel cells have a predetermined orientation that favors the oxidation reaction and the evacuation of products from the oxidation reaction. A crawler according to the preamble of claim 1 is known from DE 10 2021 202819.

### SUBJECT MATTER OF THE INVENTION

The object of the present invention is to manufacture a fuel cell-powered crawler vehicle that is free from the drawbacks of the prior art.

In accordance with the present invention, a fuel cell-powered crawler vehicle is manufactured, the crawler vehicle comprising:
- a chassis extending along a longitudinal axis; and
- a compensating device configured to incline the fuel cells in the opposite direction to the inclination assumed by the chassis of the crawler vehicle when the crawler vehicle is in operation along steep ski slopes.

In this manner, it is possible to arrange the fuel cells in plane or, in the worst case, with a slight inclination which however does not affect the performance of the fuel cells.

In this case, the compensating device comprises:
- a support configured to support the fuel cells; and
- at least one connecting coupling configured to connect said support to the chassis and allow the support to swing relative to the chassis about a pitch axis transverse to the longitudinal axis and a roll axis parallel to the longitudinal axis.

In principle, it is sufficient to hang the support from the chassis or from some structural element integral with the chassis to enable the support to compensate for the inclination of the chassis by means of the force of gravity.

In particular, the compensating device comprises at least one damper for connecting said support to the chassis and preventing oscillations of the fuel cells.

According to an embodiment of the present invention, the compensating device comprises a plurality of actuators for controlling the position of the fuel cells as a function of signals related to the inclination of the chassis of the crawler vehicle.

In this case, the movement and the speed of the movement of the fuel cells are under control.

In particular, the compensating device comprises a power unit for selectively powering the actuators as a function of said signals. In this case, there are four linear actuators constrained to the chassis and to the support by means of ball joints or the like.

The crawler vehicle comprises a control unit configured to emit said signals as a function of signals related to the inclination of the chassis of the crawler vehicle.

In this case, the crawler vehicle comprises a first inclinometer configured to acquire a signal related to the longitudinal inclination of the chassis of the crawler vehicle and transmit said signal to the control unit, and a second inclinometer configured to acquire a signal related to the lateral inclination of the chassis of the crawler vehicle and transmit said signal to the control unit.

In this manner, any inclination assumed by the chassis can be compensated in a controlled manner.

In particular, the crawler vehicle comprises a housing integral with said chassis and configured to house the fuel cells and allow the fuel cells to assume inclined configurations with respect to said housing.

In practice, the housing is dimensionally abundant around the support and fuel cells to allow relative inclinations between the fuel cell, on one side, and the housing, on the other side.

A further object of the present invention is to provide a control method of a fuel cell-powered crawler vehicle that is free from the drawbacks of the prior art.

In accordance with the present invention, a control method of a fuel cell-powered crawler vehicle is provided, the method comprising supporting the fuel cells in a movable manner relative to the chassis so as to allow the fuel cells to assume an inclination in the opposite direction to the inclination assumed by the chassis.

### BRIEF DESCRIPTION OF THE FIGURES

Further features and advantages of the present invention will become clear from the following description of non-limiting examples of embodiments, with reference to the accompanying Figures:
- Figure 1 is a side elevation view, with parts removed for clarity and schematic parts, of a crawler vehicle manufactured in accordance with the present invention;
- Figure 2 is a schematic elevation view, with parts removed for clarity and in an enlarged scale, of a detail of the crawler vehicle of Figure 1;
- Figure 3 is a schematic plan view, with parts removed for clarity, of the detail of Figure 2;
- Figure 4 is a schematic elevation view, with parts removed for clarity, of a further embodiment of the detail of Figure 2; and
- Figure 5 is a schematic plan view, with parts removed for clarity, of the detail of Figure 4.

### PREFERRED EMBODIMENT OF THE INVENTION

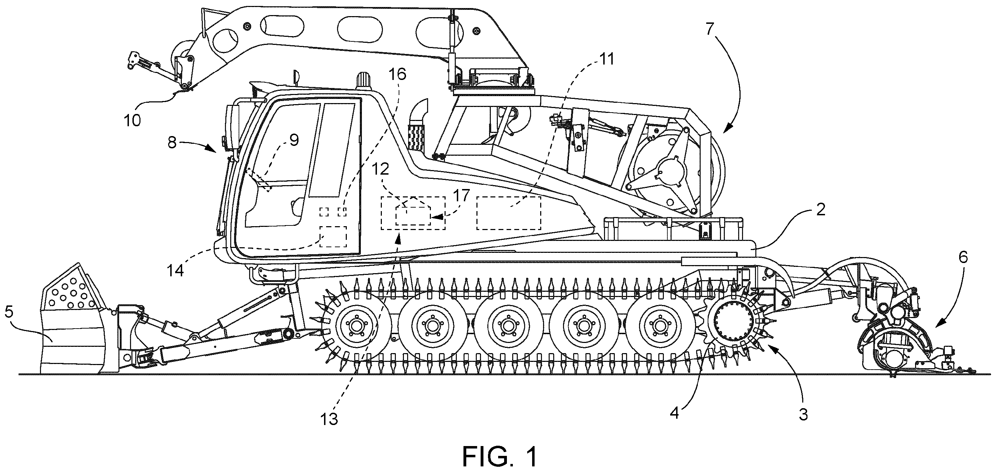

With reference to Figure 1, reference numeral 1 indicates, as a whole, a crawler vehicle for grooming ski runs. The crawler vehicle 1 comprises a chassis 2; two tracks 3; two drive wheels 4 independent of each other and respectively coupled to respective tracks 3; a shovel 5; a cutter 6; and a winch 7; a cabin 8 mounted on the chassis 2; and a user interface 9 arranged inside the cabin 8 and comprising driving and control instrumentation.

The winch 7 is mounted on the chassis 2 to selectively unwind and wind a cable 10 anchorable at an external point (not depicted in the accompanying figures) to the crawler vehicle 1 to secure the crawler vehicle when it faces particularly steep ascents and descents.

The crawler vehicle 1 comprises an electric engine 11 powered by fuel cells 12. In this case, the crawler vehicle 1 comprises a housing 13 for containing the fuel cells 12.

The crawler vehicle 1 comprises a control unit 14 configured to manage the operations of the crawler vehicle 1 and connected with the user interface 9.

The crawler vehicle 1 comprises a plurality of sensors for emitting signals that are transmitted to the control unit 14. The sensors comprise an inclinometer 15 for acquiring signals related to the longitudinal inclination (pitch) and an inclinometer 16 for acquiring signals related to the lateral inclination (roll) of the crawler vehicle **1.**

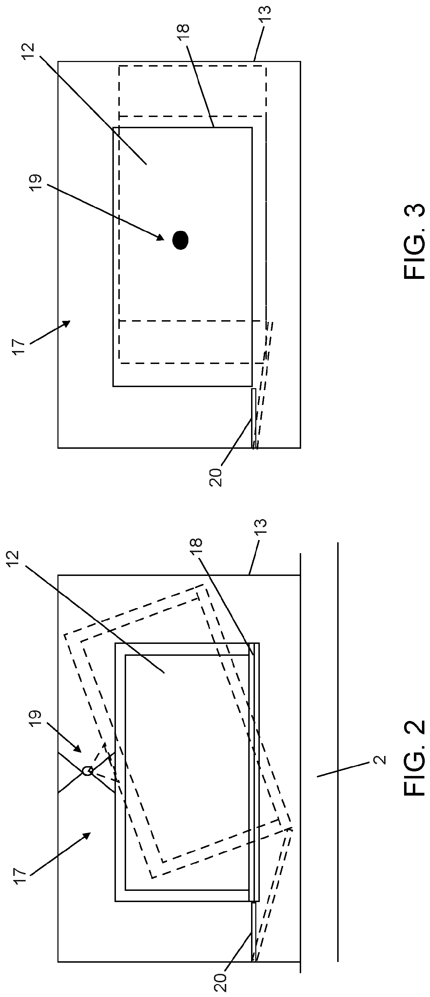

With reference to Figure 2, a compensating device 17 is arranged in the housing 13, and is constrained in a movable manner to the housing 13 and is configured to support the fuel cells 12.

In the embodiment of Figures 2 and 3, the compensating device 17 comprises a support 18 hanging from the housing 13 and a coupling 19 that constrains the support 18 to the housing 13 and allows the support 18 and the fuel cells 12 to swing in any direction.

The housing 13 is dimensioned to allow the support 18 and the fuel cells 12 to perform oscillations comprised the range from -30° to 30° in the longitudinal direction (pitch) and in the range from -15° to 15° in the transverse direction (roll).

The compensating device 17 comprises a damper 20 connected to the housing 13 and to the support 18 to prevent abrupt movements of the support 18 and the relative fuel cells 12.

In use, when the crawler vehicle 1 depicted in Figure 1 travels ski runs with steep gradients, generally ski runs classified as black have a gradient greater than 40%, the support 18 and the fuel cells 12 as a result of the force of gravity assume a horizontal configuration and form an angle relative to the housing 13 to compensate mainly the longitudinal inclination (pitch) and lateral inclination (roll).

It should be noted that an inclination of 30° corresponds to a gradient of 58%, so that the compensating device 17 is able to perfectly compensate longitudinal gradients up to gradients of the order of 58%.

In any case, it is considered tolerable to incline the fuel cells 12 up to values of +/- 15° so that the crawler vehicle powered with fuel cell batteries is suitable for any type of ski run.

As shown in the Figure, the lateral inclination (roll) generally assumes much more limited gradients.

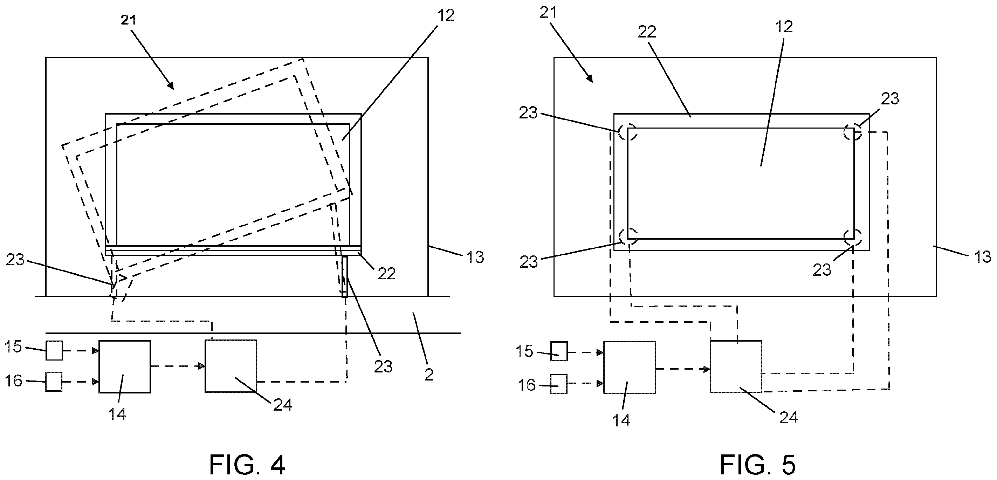

With reference to Figures 4 and 5, the crawler vehicle 1 comprises a compensating device 21 comprising a support 22 configured to support the fuel cells 12, a plurality of actuators 23 configured to connect the housing 13 to the support 22, and a power unit 24 configured to actuate the actuators 23 as a function of the signals transmitted by the control unit 14 as a function of the signals acquired by the inclinometers 15 and 16.

In order to allow inclining the support, each actuator 23 is connected by ball joints or similar to both the housing 13 and the support 22 to allow the support 22 full freedom of movement.

In use, the compensating device 21 controls the longitudinal inclination (pitch) and lateral inclination (roll) of the support 22 in a manner equal and opposite to the inclination assumed by the crawler vehicle up to a maximum permissible value.

It is apparent that variations may be made to the present invention without departing from the scope of protection of the appended claims.

## Claims

1. A fuel cell-powered crawler vehicle (1) comprising:
- a chassis (2) extending along a longitudinal axis (A); and a fuel cell (12), **characterized by**
- a compensating device (17; 21) configured to incline the fuel cell (12) in the opposite direction to the inclination assumed by the chassis (2) of the crawler vehicle (1) when the crawler vehicle (1) is in operation along steep ski slopes.

2. The crawler vehicle as claimed in claim 1, wherein the compensating device (17; 21) comprises:
- a support (18; 22) configured to support the fuel cells (12); and
- at least one connecting coupling (19) configured to connect said support (18; 22) to the chassis (2) and allow the support (18; 22) to swing relative to the chassis (2) about a pitch axis transverse to the longitudinal axis (A) and a roll axis parallel to the longitudinal axis (A).

3. The crawler vehicle as claimed in claim 1 or 2, wherein the compensating device (17) comprises at least one damper (20) for connecting said support (18) to the chassis (2).

4. The crawler vehicle as claimed in any one of the preceding claims, wherein the compensating device (21) comprises a plurality of actuators (23) for controlling the position of the fuel cells (12) as a function of signals related to the inclination of the chassis (2) of the crawler vehicle (1).

5. The crawler vehicle as claimed in claim 4, wherein the compensating device (21) comprises a power unit (24) for selectively powering the actuators (23) as a function of said signals.

6. The crawler vehicle as claimed in claim 5 and comprising a control unit (14) configured to emit said signals as a function of signals related to the inclination of the chassis (2) of the crawler vehicle (1).

7. The crawler vehicle as claimed in claim 6 and comprising a first inclinometer (15) configured to acquire a signal related to the longitudinal inclination of the chassis (2) of the crawler vehicle (1) and transmit said signal to the control unit (14).

8. The crawler vehicle as claimed in claim 6 or 7 and comprising a second inclinometer (16) configured to acquire a signal related to the lateral inclination of the chassis (2) of the crawler vehicle (1) and transmit said signal to the control unit (14).

9. The crawler vehicle as claimed in any one of the preceding claims and comprising a housing (13) integral with said chassis (2) and configured to house the fuel cells (12) and allow the fuel cells (12) to assume inclined configurations relative to said housing (13).

10. A control method of a fuel cell-powered crawler vehicle according to any of claims 1 to 9, the method comprising supporting the fuel cells (12) in a movable manner relative to a chassis (2) so as to allow the fuel cells (12) to assume an inclination in the opposite direction to the inclination assumed by the chassis (2).

11. The method as claimed in claim 10 and comprising damping displacements of the fuel cells (12) relative to the chassis (2).

12. The method as claimed in claim 10 or 11 and comprising controlling the inclination of the fuel cells (12) by means of a plurality of actuators (23) as a function of signals related to the inclination of the chassis (2) of the crawler vehicle (1).

## Patentansprüche

1. Brennstoffzellenbetriebenes Raupenfahrzeug (1) umfassend:
- ein Chassis (2), das sich entlang einer Längsachse (A) erstreckt; und
- eine Kompensationsvorrichtung (17; 21), die konfiguriert ist, die Brennstoffzelle (12) in der entgegengesetzten Richtung zu der durch das Chassis (2) des Raupenfahrzeugs (1) eingenommenen Neigung zu neigen, wenn das Raupenfahrzeug (1) entlang steiler Skipisten in Betrieb ist.

2. Raupenfahrzeug nach Anspruch 1, wobei die Kompensationsvorrichtung (17; 21) umfasst:
- eine Stütze bzw. einen Träger (18; 22), die bzw. der konfiguriert ist, die Brennstoffzellen (12) zu stützen bzw. zu tragen; und
- zumindest eine Verbindungskupplung (19), die konfiguriert ist, den Träger (18; 22) mit dem Chassis (2) zu verbinden und es dem Träger (18; 22) zu ermöglichen, relativ zu dem Chassis (2) um eine Nickachse quer zu der Längsachse (A) und eine Rollachse parallel zu der Längsachse (A) zu schwenken.

3. Raupenfahrzeug nach Anspruch 1 oder 2, wobei die Kompensationsvorrichtung (17) zumindest einen Dämpfer (20) zum Verbinden des Trägers (18) mit dem Chassis (2) umfasst.

4. Raupenfahrzeug nach einem der vorhergehenden Ansprüche, wobei die Kompensationsvorrichtung (21) eine Mehrzahl von Aktoren (23) zum Steuern bzw. Regeln der Position der Brennstoffzellen (12) in Abhängigkeit von Signalen, die mit der Neigung des Chassis (2) des Raupenfahrzeugs (1) zusammenhängen, umfasst.

5. Raupenfahrzeug nach Anspruch 4, wobei die Kompensationsvorrichtung (21) eine Leistungs- bzw. Antriebseinheit (24) zum selektiven Antreiben bzw. Stromversorgen der Aktoren (23) in Abhängigkeit von den Signalen umfasst.

6. Raupenfahrzeug nach Anspruch 5 und umfassend eine Steuerungs- bzw. Regelungseinheit (14), die konfiguriert ist, die Signale in Abhängigkeit von Signalen auszugeben, die mit der Neigung des Chassis (2) des Raupenfahrzeugs (1) zusammenhängen.

7. Raupenfahrzeug nach Anspruch 6 und umfassend einen ersten Neigungsmesser (15), der konfiguriert ist, ein Signal zu erfassen, das mit der Längsneigung des Chassis (2) des Raupenfahrzeugs (1) zusammenhängt, und das Signal an die Steuerungs- bzw. Regelungseinheit (14) zu übertragen.

8. Raupenfahrzeug nach Anspruch 6 oder 7 und umfassend einen zweiten Neigungsmesser (16), der konfiguriert ist, ein Signal zu erfassen, das mit der Seitenneigung des Chassis (2) des Raupenfahrzeugs (1) zusammenhängt, und das Signal an die Steuerungs- bzw. Regelungseinheit (14) zu übertragen.

9. Raupenfahrzeug nach einem der vorhergehenden Ansprüche und umfassend ein Gehäuse (13), das integral mit dem Chassis (2) ist und konfiguriert ist, die Brennstoffzellen (12) aufzunehmen und es den Brennstoffzellen (12) zu ermöglichen, geneigte Konfigurationen relativ zu dem Gehäuse (13) einzunehmen.

10. Steuerungs- bzw. Regelungsverfahren eines durch Brennstoffzellen betriebenen Raupenfahrzeugs, wobei das Verfahren ein Stützen bzw. Tragen der Brennstoffzellen (12) auf bewegliche Weise relativ zu einem Chassis (2) umfasst, um den Brennstoffzellen (12) zu ermöglichen, eine Neigung in der entgegengesetzten Richtung zu der durch das Chassis (2) eingenommenen Neigung einzunehmen.

11. Verfahren nach Anspruch 10 und umfassend ein Dämpfen von Verlagerungen der Brennstoffzellen (12) relativ zu dem Chassis (2).

12. Verfahren nach Anspruch 10 oder 11 und umfassend ein Steuern bzw. Regeln der Neigung der Brennstoffzellen (12) mittels einer Mehrzahl von Aktoren (23) in Abhängigkeit von Signalen, die mit der Neigung des Chassis (2) des Raupenfahrzeugs (1) zusammenhängen.

## Revendications

1. Véhicule à chenilles alimenté par piles à combustible (1) comprenant :
- un châssis (2) s'étendant le long d'un axe longitudinal (A) ; et
une pile à combustible (12), **caractérisé par** :
- un dispositif de compensation (17 ; 21) configuré pour incliner la pile à combustible (12) dans la direction opposée à l'inclinaison prise par le châssis (2) du véhicule à chenilles (1), lorsque le véhicule à chenilles (1) est en fonctionnement le long de pentes de ski abruptes.

2. Véhicule à chenilles selon la revendication 1, dans lequel le dispositif de compensation (17 ; 21) comprend :
- un support (18 ; 22) configuré pour supporter les piles à combustible (12) ; et
- au moins un couplage de raccordement (19) configuré pour raccorder ledit support (18 ; 22) au châssis (2) et pour permettre au support (18 ; 22) d'osciller par rapport au châssis (2) autour d'un axe de tangage transversal par rapport à l'axe longitudinal (A) et un axe de roulis parallèle à l'axe longitudinal (A).

3. Véhicule à chenilles selon la revendication 1 ou 2, dans lequel le dispositif de compensation (17) comprend au moins un amortisseur (20) pour raccorder ledit support (18) au châssis (2).

4. Véhicule à chenilles selon l'une quelconque des revendications précédentes, dans lequel le dispositif de compensation (21) comprend une pluralité d'actionneurs (23) pour contrôler la position des piles à combustible (12) en fonction des signaux liés à l'inclinaison du châssis (2) du véhicule à chenilles (1).

5. Véhicule à chenilles selon la revendication 4, dans lequel le dispositif de compensation (21) comprend une unité d'alimentation (24) pour alimenter sélectivement les actionneurs (23) en fonction desdits signaux.

6. Véhicule à chenilles selon la revendication 5 et comprenant une unité de contrôle (14) configurée pour émettre lesdits signaux en fonction des signaux liés à l'inclinaison du châssis (2) du véhicule à chenilles (1).

7. Véhicule à chenilles selon la revendication 6 et comprenant un premier inclinomètre (15) configuré pour acquérir un signal lié à l'inclinaison longitudinale du châssis (2) du véhicule à chenilles (1) et transmettre ledit signal à l'unité de contrôle (14).

8. Véhicule à chenilles selon la revendication 6 ou 7 et comprenant un deuxième inclinomètre (16) configuré pour acquérir un signal lié à l'inclinaison latérale du châssis (2) du véhicule à chenilles (1) et transmettre ledit signal à l'unité de contrôle (14).

9. Véhicule à chenilles selon l'une quelconque des revendications précédentes et comprenant un boîtier (13) solidaire avec ledit châssis (2) et configuré pour loger les piles à combustibles (12) et permettre aux piles à combustible (12) d'adopter des configurations inclinées par rapport audit boîtier (13).

10. Procédé de contrôle d'un véhicule à chenilles alimenté par piles à combustible selon l'une quelconque des revendications 1 à 9,
le procédé comprenant le fait de supporter les piles à combustible (12) d'une manière mobile par rapport à un châssis (2) afin de permettre aux piles à combustible (12) d'adopter une inclinaison dans la direction opposée à l'inclinaison adoptée par le châssis (2).

11. Procédé selon la revendication 10 et comprenant le fait d'amortir les déplacements des piles à combustible (12) par rapport au châssis (2).

12. Procédé selon la revendication 10 ou 11 et comprenant le fait de contrôler l'inclinaison des piles à combustible (12) au moyen d'une pluralité d'actionneurs (23) en fonction des signaux liés à l'inclinaison du châssis (2) du véhicule à chenilles (1).
